# EUROPEAN PATENT APPLICATION

(11) **EP 2 683 195 A1**
(43) Date of publication of application: **08.01.2014**
(21) Application number: 12751822.3
(22) Date of filing: 29.02.2012
(51) Int. Cl.: H04W 36/00, H04W 36/24

(54) **METHOD AND DEVICE FOR TRIGGERING HANDOVER AND TRANSFERRING MOBILITY MANAGEMENT ENTITY POOL IDENTIFICATION INFORMATION**

(30) Priority: 03.03.2011 CN 201110051255
(71) Applicant: China Academy of Telecommunications Technology, Haidian District Beijing 100191 (CN)
(72) Inventor: YANG, Yi, Haidian District Beijing 100191 (CN); BAO, Wei, Haidian District Beijing 100191 (CN); JIAO, Bin, Haidian District Beijing 100191 (CN)
(74) Representative: Körber, Martin Hans
(86) International application number: PCT/CN2012/071800
(87) International publication number: WO 2012/116642

(57) **Abstract**

Embodiments of the present application relate to the technical field of wireless telecommunications, and disclose a method and device for triggering a handover and transferring mobility management entity (MME) pool identification information. The present application solves the problem of transferring UE context information to the MME pool to which a target donor eNB (DeNB) belongs after a relay node (RN) changes DeNB. In the present application, after an RN switches from a source DeNB to a target DeNB, the RN, according to the acquired identification information of the MME pool to which the target DeNB belongs, determines whether the target DeNB and the source DeNB belong to the same MME pool; if the determination is negative, the RN transmits a handover request to the MME of a UE connecting to the RN, the handover request carrying the RN identifier as the target identifier. The present application enables the transfer of UE context to the MME pool to which the target DeNB belongs.

## Description

This application claims the benefit of Chinese Patent Application No.: 201110051255.7, filed with the Chinese Patent Office on March 3, 2011 and entitled "Method and apparatus for triggering handover and transferring identifier information of pool of mobility management entities", which is hereby incorporated by reference in its entirety.

### Field

The present invention relates to the field of wireless communications and particularly to a method and apparatus for triggering a handover and transferring identifier information of a pool of mobility management entities.

### Background

In a future mobile communication system, e.g., a Beyond Third Generation (B3G) or Long Term Evolution-Advanced (LTE-A) system, higher peak data rates and a higher cell throughput will be provided and also a higher bandwidth will be required. In order to address the issues of network deployment cost and coverage, various manufacturers and standardization organizations come to research the introduction of a Relay Node (RN) to a cellular system so as to extend a coverage area.

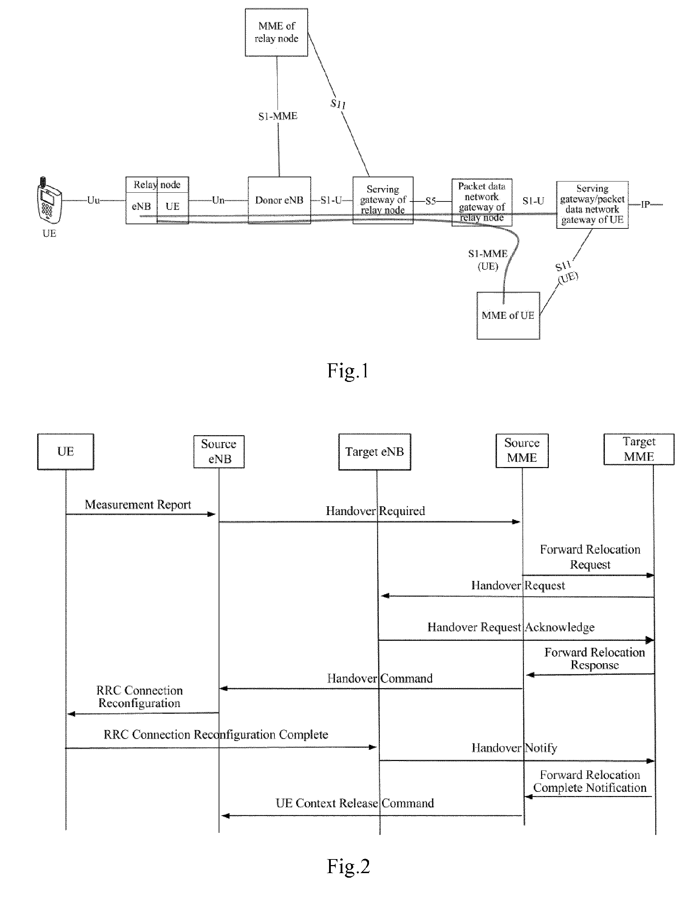

Fig.1 is the network architecture of the LTE-A system with an RN introduced thereto, where the RN accesses a core network through a donor cell served by a Donor eNB (DeNB) and has no direct wired interface with the core network, and each RN can control one or more cells. In this architecture, the interface between a User Equipment (UE) and the RN is refereed to a Uu interface, and the interface between the RN and the DeNB is referred to a Un interface.

After powered on, the RN firstly connects to the network with the identity of a UE, and the network establishes an Evolved Packet System (EPS) bearer for the RN; and the RN downloads necessary configuration data including accessible donor eNBs, donor cells and other information from Operation and Maintenance (OAM) system. The RN then establishes an S1 interface with each Mobility Management Entity (MME) in a MME pool of the accessed DeNB, and if necessary, establishes an X2 interface with an adjacent eNB. After the UE accesses the RN, all of data of the UE is mapped onto the RN bearer and transmitted to a next hop node after parsed by a Packet Data Network Gateway (PGW) of the relay node.

Based upon the foregoing network architecture, a handover process may be performed for the mobile RN to change the DeNB. In Fig.1, a Serving Gateway (SGW) and the PGW of the relay node may be the same physical entity, and an SGW and a PGW of the UE may also be the same physical entity or may be two separate physical entities.

The RN has the following dual identities in the foregoing architecture:
First the RN has the identity of a UE (hereinafter an RN-UE), and the RN is started in a similar process as a power-on attachment procedure of a UE. The RN has its won SGW/PGW and MME; and
Second the RN has the identity of an eNB (hereinafter an RN-eNB) for a UE accessing the RN. Uplink data of the UE has to be transmitted from the RN to the PGW of the RN, and then the PGW of the RN forwards the data of the UE to the SGW/PGW of the UE; and downlink data of the UE has to be transmitted from the SGW/PGW of the UE to the PGW of the RN, and then the PGW of the RN transmits the downlink data to the RN which in turn transmits the downlink data to the UE via the Uu interface.

The MME allocates a temporary identity identifier, i.e., a Globally Unique Temporary Identity (GUTI) to a UE upon each successful attachment of the UE. The MME may also allocate a new GUTI to the UE for a tracking area update of the UE. The MME can also reallocate a GUTI to the UE at any other time. The GUTI is composed of a Public Land Mobile Network Identifier (PLMN ID), an MME group identifier (ID) and a Shortened Temporary Mobile Subscriber Identity (S-TMSI). The MME group ID identifies a MME pool. The S-TMSI identifies a UE uniquely throughout a MME pool.

An S1 handover flow is as illustrated in Fig.2. A source eNB selects an appropriate target eNB for a UE according to a measurement report from the UE and sends to an MME (i.e., a source MME) serving the UE a Handover Required message carrying a target identifier: the eNB identifier and a Tracking Area Identity (TAI) of the target eNB. The source MME determines a target MME from the target TAI upon reception of the Handover Required message and sends to the target MME a Forward Relocation Request message carrying the target identifier. With this message, the source MME forwards to the target MME a context of the UE (a UE context) including a Mobility Management (MM) context and a bearer context, where the MM context includes a temporary identifier GUTI, a Non-Access Stratum (NAS) key, a security algorithm and other information, and the bearer context includes the identifier of a bearer, a Quality of Service (QoS) and other information. The target MME determines the target eNB from the target eNB identifier and sends a Handover Request message to the target eNB. The target eNB transmits a handover command (RRC Connection Reconfiguration) generated by the target eNB transparently to the source eNB which in turn forwards it to the UE.

For a mobile RN, the RN may have its DeNB changed and further enter a new MME pool. A UE served by the RN is stationary relative to the location of the RN and has a good propagation path kept, so it is unlikely for the UE to reselect or be handed over to a cell out of the RN while the RN is moving. An MME selected by the UE when an initial connection is established simply sends downlink S1 signaling to a PGW of the RN, which does not change with the RN moving in location, so the location of the UE appears unchanged to the MME of the UE.

The inventors have identified during the handover the following technical problems in the prior art:

After the UE enters to the new MME pool together with the RN, an operator administering and operating the new MME pool may require the UE in this area to be controlled by a local MME under a local roaming restriction rule, but the entering UE can not be controlled because context information of the UE is absent in any MME within the new MME pool.

On the other hand, the RN has to maintain S1 interfaces concurrently with the different MME pools after selecting an MME in the new MME pool for the UE. As the RN moves, the RN has to establish S1 interfaces with new MME pools when the RN traverses more MME pools service areas, and consequently the RN will maintain a very large number of S1 interfaces. Transferring UE context to the new MME pool together with the RN can let RN release the S1 interface with original MME pool to thereby facilitate a reduction in the number of interfaces of the RN with the MMEs.

In summary, the context of the UE has to be transferred from the original MME to the MME in the new MME pool due to numerous reasons, but a specific implementation solution to transfer of the context of the UE to the MME in the new MME pool has been absent so far.

### Summary

Embodiments of the invention provide a method and apparatus for triggering a handover so as to address the problem of how to transfer context information of a UE to a MME pool serving a target DeNB after an RN has changed its DeNB.

A method of triggering a handover includes:
an Relay Node, RN, determining whether a target Donor eNB, DeNB, and a source DeNB are served by the same MME pool according to obtained identifier information of a MME pool serving the target DeNB after handover from the source DeNB to the target DeNB; and
the RN sending a Handover Required message carrying a target identifier, which is the identifier of the RN, to an MME of a UE connected to the RN upon determining that the target DeNB and the source DeNB not served by the same MME pool to instruct the MME of the UE to send context information of the UE to an MME in the MME pool serving the target DeNB according to the target identifier.

A relay node includes:
a determination unit configured to determine whether a target Donor eNB, DeNB, and a source DeNB are served by the same MME pool according to obtained identifier information of a MME pool serving the target DeNB after handover from the source DeNB to the target DeNB; and
a trigger unit configured to send a Handover Required message carrying a target identifier, which is the identifier of the relay node, to an MME of a UE connected to the relay node upon determining the target DeNB and the source DeNB not served by the same MME pool to instruct the MME of the UE to send context information of the UE to an MME in the MME pool serving the target DeNB according to the target identifier.

In this solution, an RN determines whether a target DeNB and a source DeNB are served by the same MME pool after handover from the source DeNB to the target DeNB and sends a Handover Required message carrying a target identifier, which is the identifier of the RN, to an MME of a UE connected to the RN upon determining that the target DeNB and the source DeNB are not served by the same MME pool, and as in the handover flow in Fig.2, the MME of the UE connected to the RN will send a Forward Relocation Request message carrying context information of the UE to an MME in the MME pool serving the target DeNB to thereby transfer the context information of the UE to the MME pool serving the target DeNB.

Embodiments of the invention further provide a method and apparatus for transferring identifier information of a MME pool so as to address the problem of how to obtain identifier information of a MME pool serving the target DeNB after an RN has changed its DeNB.

A method of transferring identifier information of a pool of Mobility Management Entities, MMEs, includes:
a Donor, DeNB, receiving a Handover Request message; and
the DeNB sending identifier information of a MME pool serving the DeNB to an entity to be handed over to the DeNB in a handover command.

A method of transferring identifier information of a pool of Mobility Management Entities, MMEs, includes:
an Operation and Maintenance, OAM, apparatus receiving a request sent from a Relay Node, RN, to download configuration information; and
the OAM apparatus sending identifier information of a MME pool serving a Donor eNB, DeNB, to the RN.

A donor eNB includes:
a reception unit configured to receive a Handover Request; and
a transmission unit configured to send identifier information of a MME pool serving the DeNB to an entity to be handed over to the donor eNB in a handover command.

An OAM apparatus includes:
a reception unit configured to receive a request sent from a Relay Node, RN, to download configuration information; and
a transmission unit configured to send identifier information of a MME pool serving a Donor eNB, DeNB, to the RN.

In this solution, a DeNB sends identifier information of a MME pool serving the DeNB to an entity to be handed over upon reception of a Handover Request; or an OAM apparatus sends identifier information of a MME pool serving the DeNB to an RN upon reception of a request sent from the RN to download configuration information. Thus the RN when changing its DeNB can obtain the identifier information of the MME pool serving the target DeNB from the target DeNB or the OAM apparatus.

### Brief Description of the Drawings

Fig.1 is a schematic diagram of node relationships in a network including an RN in the prior art;
Fig.2 is a schematic flow chart of an S1 handover in the prior art;
Fig.3 is a schematic flow chart of a method according to an embodiment of the invention;
Fig.4 is a schematic flow chart of another method according to an embodiment of the invention;
Fig.5 is a schematic flow chart of a further method according to an embodiment of the invention;
Fig.6A is a schematic flow chart of a first embodiment of the invention;
Fig.6B is a schematic flow chart of a second embodiment of the invention;
Fig.6C is a schematic flow chart of a third embodiment of the invention;
Fig.6D is a schematic flow chart of a fourth embodiment of the invention;
Fig.7 is a schematic structural diagram of an apparatus according to an embodiment of the invention; and
Fig.8 is a schematic structural diagram of another apparatus according to an embodiment of the invention.

### Detailed Description of the Embodiments

In order to transfer a UE context to an MME in a new MME pool after an RN is handed over, an embodiment of the invention provides a method of triggering a handover, and in this method, a handover procedure of an RN is triggered after the RN is handed over from a source DeNB to a target DeNB served by a MME pool different from the source DeNB to thereby send UE context information from a source MME of the UE to a new serving MME in the MME pool serving the target DeNB in the handover procedure.

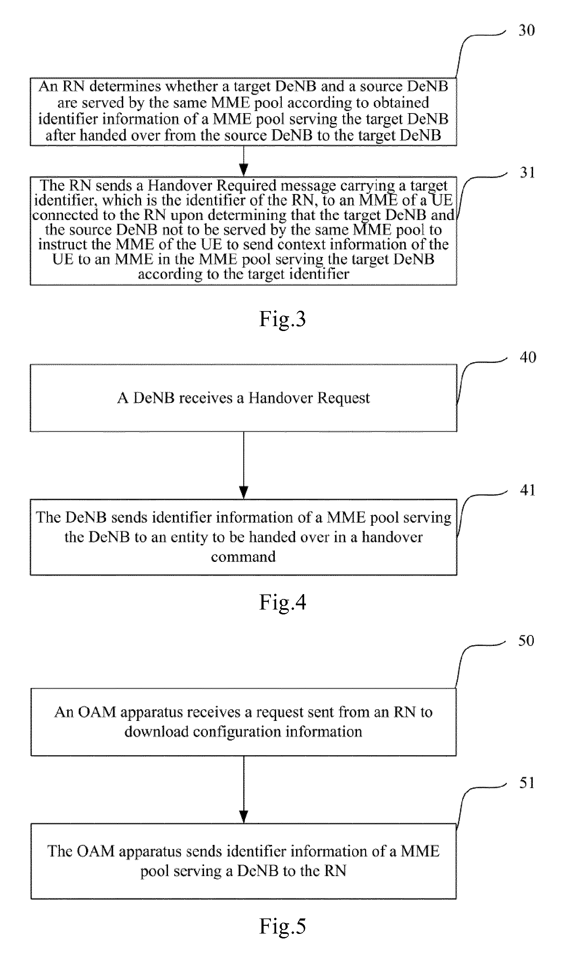

Referring to Fig.3, a method of triggering a handover according to an embodiment of the invention includes the following steps:
Step 30: An RN determines whether a target DeNB and a source DeNB are served by the same MME pool according to obtained identifier information of a MME pool serving the target DeNB after handover from the source DeNB to the target DeNB; and
Step 31: The RN sends a Handover Required message carrying a target identifier, which is the identifier of the RN, to an MME of a UE accessing the RN (i.e., an MME currently serving the UE) upon determining that the target DeNB and the source DeNB not to be served by the same MME pool to instruct the MME of the UE to send context information of the UE to an MME in the MME pool serving the target DeNB according to the target identifier.

In the step 30, whether a target DeNB and a source DeNB are served by the same MME pool can be determined particularly in the following four methods:

### First Method

The RN discovers entering into a new Tracking Area (TA) after handover from the source DeNB to the target DeNB and sends a Tracking Area Update (TAU) Request message to the network side when the current TA is absent in a currently stored lists of tracking areas; and an MME of the RN (i.e., an MME currently serving the RN) returns to the RN a newly allocated GUTI including an MME group identifier which is the identifier of the MME pool serving the target DeNB upon reception of the TAU Request message; and

The RN determines whether the MME group identifier included in the new GUTI returned from the MME of the RN is the same as the identifier of a MME pool serving the source DeNB, and if so, then the RN determines that the target DeNB and the source DeNB are served by the same MME pool; otherwise, the RN determines that the target DeNB and the source DeNB are not served by the same MME pool.

### Second Method

The RN determines whether an MME group identifier carried in a handover command sent from the target DeNB in a handover procedure is the same as the identifier of a MME pool serving the source DeNB, and if so, then the RN determines that the target DeNB and the source DeNB are served by the same MME pool; otherwise, the RN determines that the target DeNB and the source DeNB are not served by the same MME pool. The MME group identifier carried in the handover command is the identifier of the MME pool serving the target DeNB.

### Third Method

The RN downloads identifier information of a MME pool serving each DeNB accessible to the RN from an Operation and Maintenance (OAM) entity before being handed over from the source DeNB to the target DeNB; and the RN can download the identifier information of the pools of MMEs during a startup phase; and

The RN determines whether the identifier of the MME pool serving the target DeNB is the same as the identifier of a MME pool serving the source DeNB according to the downloaded identifier information of the MME pools, and if so, then the RN determines that the target DeNB and the source DeNB are served by the same MME pool; otherwise, the RN determines that the target DeNB and the source DeNB are not served by the same MME pool.

### Fourth Method

The RN reports information of the target DeNB to an OAM apparatus, for example, reports the eNB identifier or the eNB name of the target DeNB to the OAM apparatus, after being handed over from the source DeNB to the target DeNB; and the OAM apparatus sends identifier information of the MME pool serving the target DeNB to the RN; and

The RN determines whether the identifier of the MME pool serving the target DeNB is the same as the identifier of a MME pool serving the source DeNB upon reception of the identifier of the MME pool serving the target DeNB returned from the OAM apparatus, and if so, then the RN determines that the target DeNB and the source DeNB are served by the same MME pool; otherwise, the RN determines that the target DeNB and the source DeNB are not served by the same MME pool.

Preferably after the RN determines that the target DeNB and the source DeNB are not served by the same MME pool and before the RN sends the Handover Required message to the MME of the UE connected to the RN, the RN can establish an S1 interface with the MME in the MME pool serving the target DeNB; and then in the step 31, the RN sends the Handover Required message to the MME of the UE connected to the RN via the established S1 interface.

The RN establishes the S1 interface with the MME in the MME pool serving the target DeNB as follows: firstly the RN obtains an IP address of the MME in the MME pool serving the target DeNB, and then the RN establishes the S1 interface with the MME according to the IP address. The RN can obtain the IP address of the MME in numerous methods, for example, IP addresses of respective MMEs are preconfigured in the RN, and the RN obtains the IP address from configuration information; and for a method of the RN establishing the S1 interface with the MME according to the IP address, reference can be made to the description in the protocol Release 8/9/10 3GPP TS 36.413.

In the step 31, after the RN sends the Handover Required message to the MME of the UE connected to the RN, the MME of the UE connected to the RN sends a Forward Relocation Request message carrying the context information of the UE to the MME in the MME pool serving the target DeNB as in the existing flow in Fig.2 to thereby transfer the context information of the UE to the MME pool serving the target DeNB.

The context of the UE (the UE context) includes a Mobility Management (MM) context and a bearer context, where the MM context includes a temporary identifier GUTI, a Non-Access Stratum (NAS) key, a security algorithm and other information, and the bearer context includes the identifier of a bearer, a Quality of Service (QoS) and other information.

Furthermore, the source MME calculates and sends a new Next Hop (NH) value and a Next hop Chaining Counter (NCC) value to the target MME upon reception of the Handover Required (HO Required) sent from a source eNB. The target MME puts the received NH and NCC in the Handover Request (HO Request) and sends it to a target eNB for use. The target eNB puts the NCC in a transparent container and transmits it transparently to the source eNB over a core network in order to synchronize an NH key with the UE. The handover command (HO Command) carrying a handover command message (corresponding to an RRC Connection Reconfiguration message of an air interface) generated by the target eNB is forwarded from the source eNB to the UE. The UE synchronizes the NH with the target eNB according to the NCC and further generates the key for use by the air interface upon reception of the handover command message.

In the step 31, the identifier of the relay node includes the eNB identifier (Global eNB ID) and a Tracking Area Identity (TAI) of the relay node.

Referring to Fig.4, an embodiment of the invention further provides a method of transferring identifier information of a MME pool, which particularly includes the following steps:
Step 40: A DeNB receives a Handover Request message; and
Step 41: The DeNB sends identifier information of a MME pool serving the DeNB to an entity to be handed over to the DeNB in a handover command.

In the step 41, the DeNB can send a handover command carrying the identifier information of a MME pool serving the DeNB to any entity being handed over. Alternatively:
The DeNB can firstly determine whether the entity is being handed over to a donor cell managed by the DeNB after the DeNB receives the Handover Request and before the DeNB sends the identifier information of the MME pool serving the DeNB to the entity to be handed over in the handover command; and if the DeNB determines that the entity is being handed over to the donor cell managed by the DeNB, then the DeNB sends the identifier information of the MME pool serving the DeNB to the entity to be handed over in the handover command; otherwise, the DeNB will not send the identifier information of the MME pool serving the DeNB to the entity to be handed over.

Alternatively:
The DeNB firstly determines whether the entity to be handed over is an RN after the DeNB receives the Handover Request and before the DeNB sends the identifier information of the MME pool serving the DeNB to the entity to be handed over in the handover command; and if the DeNB determines that the entity to be handed over is an RN, then the DeNB sends the identifier information of the MME pool serving the DeNB to the entity to be handed over in the handover command; otherwise, the DeNB will not send the identifier information of the MME pool serving the DeNB to the entity to be handed over. The DeNB can determine whether the entity to be handed over is an RN according to information of the entity to be handed over provided from a source eNB in the Handover Request.

Referring to Fig.5, an embodiment of the invention further provides a method of transferring identifier information of a MME pool, which particularly includes the following steps:
Step 50: An OAM apparatus receives a request sent from an RN to download configuration information; and
Step 51: The OAM apparatus sends identifier information of a MME pool serving a DeNB to the RN.

In the step 50, the OAM apparatus can receive the request sent from the RN to download configuration information during a startup phase of the RN; and

Correspondingly in the step 51, the OAM apparatus sends to the RN identifier information of a MME pool serving each DeNB accessible to the RN.

In the step 50, the OAM apparatus can alternatively receive the request, carrying identifier information of a target DeNB, sent from the RN to download configuration information after the RN is handed over from a source DeNB to the target DeNB; and

Correspondingly in the step 51, the OAM apparatus sends identifier information of a MME pool serving the target DeNB to the RN.

The invention will be described below in connection with particular embodiments.

An essential idea of the invention lies in that a UE is handed over to a new MME pool after an RN knows a change to a MME pool to which the RN is connected. The handover may be an S1 handover, and the RN to which the UE is connected may not be changed but only an MME of the UE may be changed at the end of the handover.

The RN can know a change to the MME pool in the following several schemes:
In a first scheme, the RN-UE part notifies the RN-eNB part upon knowledge of a change to the MME pool. In this scheme, the RN-UE knows the change to the MME pool from the NAS layer (the first embodiment) or knows the change to the MME pool from the RRC layer (the second embodiment). The RN-eNB knows the change to the MME pool from internal interaction of the RN to thereby switch the UE to the new MME pool.

In a second scheme, the RN-eNB part obtains a MME pool serving a target DeNB from an OMA entity (the third embodiment) and hands over the UE to the new MME pool upon determining a change to the MME pool.

### First Embodiment

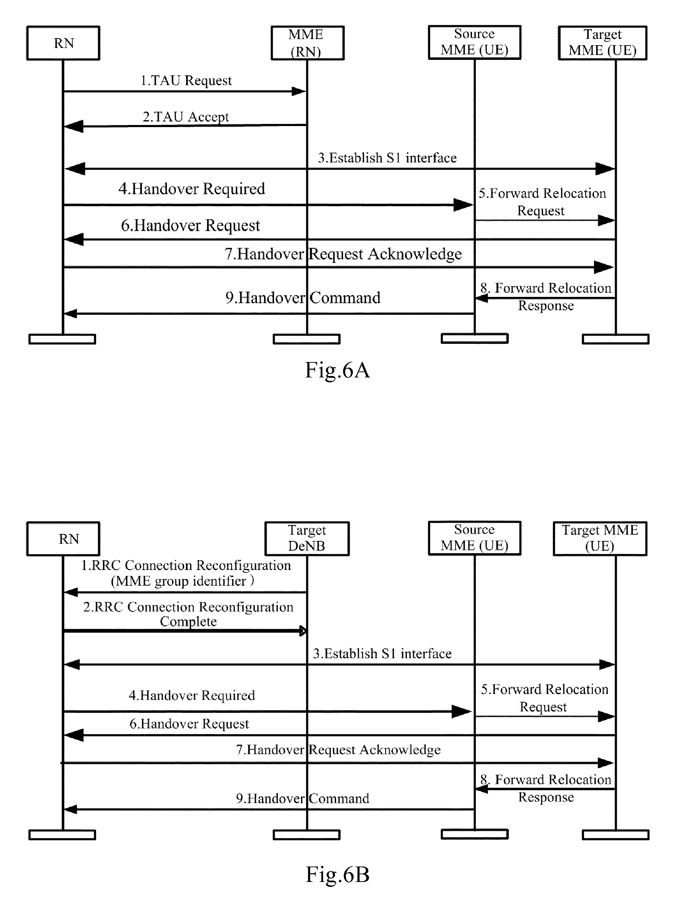

As illustrated in Fig.6A:
Step 1: An RN performs a TAU if it discovers entering into a new TA which does not belong to a currently stored list of TAs after being handed over to a new donor cell.
Step 2: An MME allocates a new GUTI and list of TAIs to the RN.
Step 3: The RN determines from the newly allocated GUTI whether MME group ID is changed, and if so, then the RN establishes an S1 interface with an MME in a new MME pool.
Step 4: The RN hands over a UE in a connected state served by the RN to the new MME pool: The RN sends a Handover Required message to an MME of each UE in a connected state. The Handover Required message includes a target identifier which is set to the identifier of the RN, i.e., a global eNB ID and a TAI of the RN.

A module of the RN receiving the GUTI may be separate from a module initiating an S1 handover, and in this case, the module receiving the GUTI will notify the module initiating the S1 handover upon determining a change in MME pool, or the module receiving the GUTI notifies the module initiating the S1 handover of the received GUTI, and the latter module determines whether there is a change in MME pool. This falls into an internal implementation of the RN.

Step 5 to step 9: The MME of the UE will send a Forward Relocation Request message carrying context information of the UE to the MME in the MME pool serving a target DeNB, and the remaining handover flow is the same as the existing S1 handover procedure.

### Second Embodiment

As illustrated in Fig.6B:
Step 1 to step 2: When an RN is handed over, a target DeNB puts the identifier of a group of MMEs serving the target DeNB in a handover command and sends it to the RN through a source DeNB, and the RN returns an RRC Connection Reconfiguration Complete message.

The DeNB can notify an MME group identifier to any entity handed over to the DeNB, or can notify an MME group identifier only to an entity handed over to a donor cell managed by the DeNB or can notify an MME group identifier only upon knowledge of a handed over entity being an RN.

The DeNB can know from a Handover Request sent from a source eNB that a handed over entity is an RN.

Step 3: After being handed over to the target DeNB, the RN checks whether the identifier of the group of MMEs serving the current DeNB is the same as the identifier of a group of MMEs serving the DeNB before the handover, and if not so, then the RN establishes an S 1 interface with an MME in the new MME pool.

Step 4: The RN hands over a UE in a connected state served by the RN to the new MME pool: The RN sends a Handover Required message to an MME of each UE in a connected state. The Handover Required message includes a target identifier which is set to the identifier of the RN, i.e., a global eNB ID and a TAI of the RN.

A module of the RN receiving the handover command may be separate from a module initiating an S1 handover, and in this case, the module receiving the handover command will notify the module initiating the S1 handover upon determining a change in MME pool, or the module receiving the handover command notifies the module initiating the S1 handover of the received MME group identifier, and the latter module determines whether there is a change in MME pool. This falls into an internal implementation of the RN.

Step 5 to step 9: The MME of the UE will send a Forward Relocation Request message carrying context information of the UE to an MME in the MME pool serving the target DeNB, and the remaining handover flow is the same as the existing S1 handover procedure.

### Third Embodiment

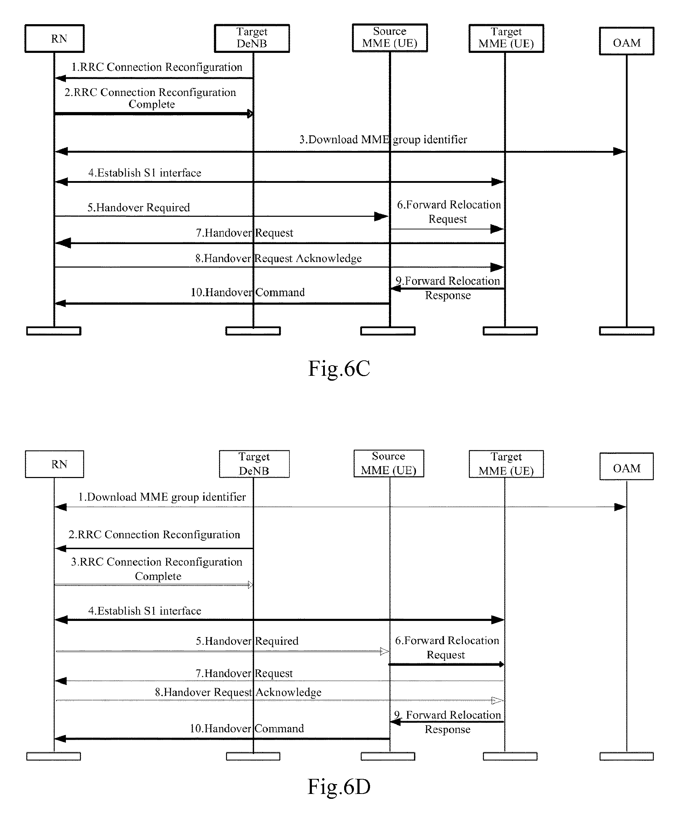

As illustrated in Fig.6C:
Step 1 to step 2: When an RN is handed over, a target DeNB sends a Connection Reconfiguration message to the RN through a source DeNB, and the RN returns an RRC Connection Reconfiguration Complete message.
Step 3: The RN reports relevant information of the current DeNB, e.g., the global eNB ID or the eNB name of the current DeNB, to an OAM entity, and then the OAM entity downloads the identifier of a group of MMEs serving the current DeNB to the RN.
Step 4: The RN checks whether the identifier of the group of MMEs serving the current DeNB is the same as the identifier of a group of MMEs serving the DeNB before the handover, and if not so, then the RN establishes an S 1 interface with an MME in the new MME pool.
Step 5: The RN hands over a UE in a connected state served by the RN to the new MME pool: The RN sends a Handover Required message to an MME of each UE in a connected state. The Handover Required message includes a "Target Identifier" which is set to the identifier of the RN, i.e., a global eNB ID and a TAI of the RN.
Step 6 to step 10: The MME of the UE will send a Forward Relocation Request message carrying context information of the UE to the MME in the MME pool serving the target DeNB, and the remaining handover flow is the same as the existing S1 handover procedure.

### Fourth Embodiment

As illustrated in Fig.6D:
Step 1: An RN downloads the identifier of a group of MMEs serving each accessible DeNB from an OAM entity during a startup phase.
Step 2 to Step 3: When the RN is handed over, a target DeNB sends a Connection Reconfiguration message to the RN through a source DeNB, and the RN returns an RRC Connection Reconfiguration Complete message.
Step 4: The RN checks whether the identifier of a group of MMEs serving the current DeNB is the same as the identifier of a group of MMEs serving the DeNB before the handover according to information of the downloaded MME group identifiers, and if not so, then the RN establishes an S 1 interface with an MME in the new MME pool.
Step 5: The RN hands over a UE in a connected state served by the RN to the new MME pool: The RN sends a Handover Required message to an MME of each UE in a connected state. The Handover Required message includes a "Target Identifier" which is set to the identifier of the RN, i.e., a global eNB ID and a TAI of the RN.
Step 6 to step 10: The MME of the UE will send a Forward Relocation Request message carrying context information of the UE to the MME in the MME pool serving the target DeNB, and the remaining handover flow is the same as the existing S1 handover procedure.

An embodiment of the invention further provides a wireless communication system including:
A Relay Node (RN) configured to send a Tracking Area Update (TAU) Request message to the network side upon discovering an entry into a new Tracking Area (TA), information of which is absent in a currently stored list of tracking areas, after handover from a source Donor eNB (DeNB) to a target DeNB; and to determine whether an MME group identifier included in a Globally Unique Temporary Identifier (GUTI) returned from an MME of the RN is the same as the identifier of a MME pool serving a source DeNB, and if not so, to determine that the target DeNB and the source DeNB are not served by the same MME pool, and to send a Handover Required message carrying a target identifier, which is the identifier of the relay node, to an MME of a UE accessing the RN;
The MME of the RN configured to return the newly allocated GUTI including the MME group identifier, which is the identifier of a MME pool serving the target DeNB, to the RN upon reception of the TAU Request message; and
The MME of the UE accessing the RN configured to send a Forward Relocation Request message carrying context information of the UE to an MME in the MME pool serving the target DeNB upon reception of the Handover Required message.

An embodiment of the invention further provides a wireless communication system including:
A Relay Node (RN) configured to determine whether the identifier of a MME pool serving a target Donor eNB (DeNB) carried in a handover command sent from the target DeNB in a handover procedure is the same as the identifier of a MME pool serving a source DeNB after handover from the source DeNB to the target DeNB, and if not so, to determine that the target DeNB and the source DeNB are not served by the same MME pool, and to send a Handover Required message carrying a target identifier, which is the identifier of the relay node, to an MME of a UE accessing the RN;
The target DeNB configured to receive a Handover Request sent from the RN and to send identifier information of the MME pool serving the DeNB in the handover command; and
The MME of the UE accessing the RN configured to send a Forward Relocation Request message carrying context information of the UE to an MME in the MME pool serving the target DeNB upon reception of the Handover Required message.

An embodiment of the invention further provides a wireless communication system including:
A Relay Node (RN) configured to download identifier information of a MME pool serving each Donor eNB (DeNB) accessible to the RN from an Operation and Maintenance (OAM) apparatus; and to determine whether the downloaded identifier of a MME pool serving a target DeNB is the same as the identifier of a MME pool serving a source DeNB after handover from the source DeNB to the target DeNB, and if not so, to determine that the target DeNB and the source DeNB are not served by the same MME pool, and to send a Handover Required message carrying a target identifier, which is the identifier of the relay node, to an MME of a UE accessing the RN;
The OAM apparatus configured to receive a request sent from the RN to download configuration information and to send to the RN the identifier information of the MME pool serving each DeNB accessible to the RN; and
The MME of the UE accessing the RN configured to send a Forward Relocation Request message carrying context information of the UE to an MME in the MME pool serving the target DeNB upon reception of the Handover Required message.

An embodiment of the invention further provides a wireless communication system including:
A Relay Node (RN) configured to report information of a target Donor eNB (DeNB) to an OAM apparatus after handover from a source DeNB to the target DeNB, to determine whether the identifier of a MME pool serving the target DeNB returned from the OAM apparatus is the same as the identifier of a MME pool serving the source DeNB, and if not so, to determine that the target DeNB and the source DeNB are not served by the same MME pool, and to send a Handover Required message carrying a target identifier, which is the identifier of the relay node, to an MME of a UE accessing the RN;
The OAM apparatus configured to receive the information of the target DeNB reported from the RN and to send identifier information of the MME pool serving the target DeNB to the RN; and
The MME of the UE accessing the RN configured to send a Forward Relocation Request message carrying context information of the UE to an MME in the MME pool serving the target DeNB upon reception of the Handover Required message.

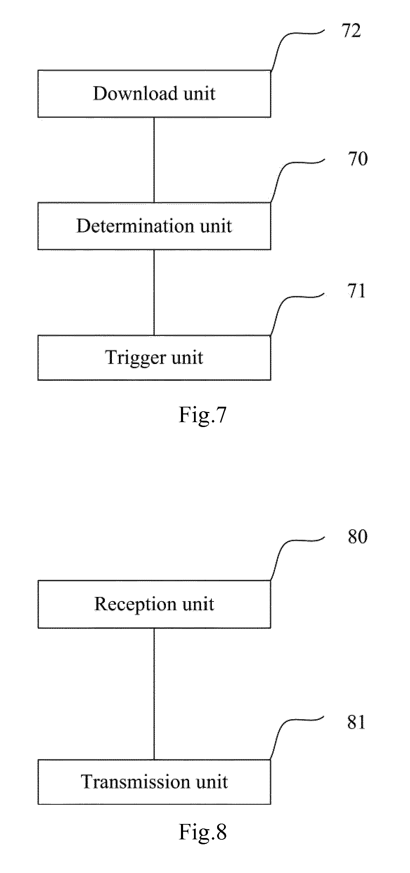

Referring to Fig.7, an embodiment of the invention further provides a relay node including:
A determination unit 70 configured to determine whether a target Donor eNB (DeNB) and a source DeNB are served by the same MME pool according to obtained identifier information of a MME pool serving the target DeNB after handover from the source DeNB to the target DeNB; and
A trigger unit 71 configured to send a Handover Required message carrying a target identifier, which is the identifier of the relay node, to an MME of a UE accessing the relay node upon determining that the target DeNB and the source DeNB not to be served by the same MME pool to instruct the MME of the UE to send context information of the UE to an MME in the MME pool serving the target DeNB according to the target identifier.

The determination unit 70 is configured:
To send a Tracking Area Update (TAU) Request message to the network side upon discovering an entry into a new Tracking Area (TA), information of which is absent in a currently stored list of tracking areas; and
To determine whether the identifier of the MME pool serving the target DeNB included in a Globally Unique Temporary Identifier (GUTI) allocated from an MME of the relay node is the same as the identifier of a MME pool serving the source DeNB, and if so, to determine that the target DeNB and the source DeNB are served by the same MME pool; otherwise, to determine that the target DeNB and the source DeNB are not served by the same MME pool.

The determination unit 70 is configured:
To determine whether the identifier of the MME pool serving the target DeNB carried in a handover command sent from the target DeNB in a handover procedure is the same as the identifier of a MME pool serving the source DeNB, and if so, to determine that the target DeNB and the source DeNB are served by the same MME pool; otherwise, to determine that the target DeNB and the source DeNB are not served by the same MME pool.

The apparatus further includes:
A download unit 72 configured to download identifier information of a MME pool serving each DeNB accessible to the RN from an Operation and Maintenance (OAM) apparatus before handed over from the source DeNB to the target DeNB; and

The determination unit 70 is configured:
To determine whether the downloaded identifier of the MME pool serving the target DeNB is the same as the identifier of the MME pool serving the source DeNB, and if so, to determine that the target DeNB and the source DeNB are served by the same MME pool; otherwise, to determine that the target DeNB and the source DeNB are not served by the same MME pool.

The determination unit 70 is configured:
To report information of the target DeNB to an OAM apparatus; and
To determine whether the identifier of the MME pool serving the target DeNB returned from the OAM apparatus is the same as the identifier of a MME pool serving the source DeNB upon reception of the identifier of the MME pool serving the target DeNB, and if so, to determine that the target DeNB and the source DeNB are served by the same MME pool; otherwise, to determine that the target DeNB and the source DeNB are not served by the same MME pool.

The trigger unit 71 is configured:
To establish an S1 interface with the MME in the MME pool serving the target DeNB and to send the Handover Required message to the MME of the UE accessing the relay node via the established S1 interface, when it is determined that the target DeNB and the source DeNB are not served by the same MME pool.

The identifier of the relay node includes a global eNB ID and a Tracking Area Identity (TAI) of the relay node.

Referring to Fig.8, an embodiment of the invention further provides a Donor eNB (DeNB) including:
A reception unit 80 configured to receive a Handover Request; and
A transmission unit 81 configured to send identifier information of a MME pool serving the DeNB to an entity to be handed over to the donor eNB in a handover command.

The transmission unit 81 is configured:
To determine whether the entity is handed over to a donor cell managed by the DeNB; and to send the identifier information of the MME pool serving the DeNB to the entity to be handed over in the handover command upon determining that the entity is handed over to the donor cell managed by the DeNB.

The transmission unit 81 is configured:
To determine whether the entity to be handed over is a Relay Node (RN); and to send the identifier information of the MME pool serving the DeNB to the entity to be handed over in the handover command upon determining that the entity to be handed over is an RN.

Still referring to Fig.8, an embodiment of the invention further provides an Operation and Maintenance (OAM) apparatus including:
A reception unit 80 configured to receive a request sent from a Relay Node (RN) to download configuration information; and
A transmission unit 81 configured to send identifier information of a MME pool serving a Donor eNB (DeNB) to the RN.

The reception unit 80 is configured:
To receive the request sent from the RN to download configuration information during a startup phase of the RN; and

The transmission unit 81 is configured:
To send to the RN identifier information of a MME pool serving each DeNB accessing to the RN.

The reception unit 80 is configured:
To receive the request, carrying information of a target DeNB, sent from the RN to download configuration information after the RN is handed over from a source DeNB to the target DeNB; and
The transmission unit 81 is configured:
   To send the identifier information of a MME pool serving the target DeNB to the RN.

In summary the invention has the following advantageous effects:
In the solutions according to the embodiments of the invention, an RN determines whether a target DeNB and a source DeNB are served by the same MME pool after handover from the source DeNB to the target DeNB and sends a Handover Required message carrying a target identifier, which is the identifier of the RN, to an MME of a UE accessing the RN upon determining that the target DeNB and the source DeNB are not served by the same MME pool, and as in the handover flow in Fig.2, the MME of the UE accessing the RN will send a Forward Relocation Request message carrying context information of the UE to an MME in a MME pool serving the target DeNB to thereby transfer the context information of the UE to the MME pool serving the target DeNB.

With the inventive technology, a context of a UE can be transferred to a MME pool where an RN currently resides when the UE moves with the RN to thereby achieve the purpose of limiting mobility of the UE by a local MME while lowering the number of interfaces between the RN and MMEs and alleviate a management effort of interfaces.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method of triggering a handover, comprising:
an Relay Node, RN, determining whether a target Donor eNB, DeNB, and a source DeNB are served by a same MME pool after being handed over from the source DeNB to the target DeNB; and
if not so, then sending a Handover Required message carrying a target identifier, which is an identifier of the RN, to an MME of a UE connected to the RN to instruct the MME of the UE to send context information of the UE to an MME in a MME pool serving the target DeNB according to the target identifier.

2. The method according to claim 1, wherein the determining whether the target DeNB and the source DeNB are served by the same MME pool comprises:
the RN determining whether an identifier of the MME pool serving the target DeNB comprised in a Globally Unique Temporary Identifier, GUTI, allocated from an MME of the RN is same as an identifier of a MME pool serving the source DeNB, and if so, then determining that the target DeNB and the source DeNB are served by the same MME pool; otherwise, determining that the target DeNB and the source DeNB are not served by the same MME pool; or
the determining whether the target DeNB and the source DeNB are served by the same MME pool comprises:
the RN determining whether an identifier of the MME pool serving the target DeNB carried in a handover command sent from the target DeNB is same as an identifier of a MME pool serving the source DeNB, and if so, then determining that the target DeNB and the source DeNB are served by the same MME pool; otherwise, determining that the target DeNB and the source DeNB are not served by the same MME pool; or
the determining whether the target DeNB and the source DeNB are served by the same MME pool comprises:
the RN reporting information of the target DeNB to an Operation and Maintenance, OAM, apparatus; and
the RN determining whether an identifier of the MME pool serving the target DeNB returned from the OAM apparatus is same as an identifier of a MME pool serving the source DeNB, and if so, then determining that the target DeNB and the source DeNB are served by the same MME pool; otherwise, determining that the target DeNB and the source DeNB are not served by the same MME pool.

3. The method according to claim 1, wherein before the RN is handed over from the source DeNB to the target DeNB, the method further comprises:
the RN downloading identifier information of a MME pool serving each DeNB accessible to the RN from an Operation and Maintenance, OAM, entity; and
the determining whether the target DeNB and the source DeNB are served by the same MME pool according to obtained identifier information of a MME pool serving the target DeNB comprises:
the RN determining whether a downloaded identifier of the MME pool serving the target DeNB is same as an identifier of a MME pool serving the source DeNB, and if so, then determining that the target DeNB and the source DeNB are served by the same MME pool; otherwise, determining that the target DeNB and the source DeNB are not served by the same MME pool.

4. The method according to any one of claims 1 to 3, wherein after the RN determines that the target DeNB and the source DeNB are not served by the same MME pool and before the RN sends the Handover Required message to the MME of the UE connected to the RN, the method further comprises:
the RN establishing an S1 interface with an MME in the MME pool serving the target DeNB; and
the RN sending the Handover Required message to the MME of the UE connected to the RN comprises:
the RN sending the Handover Required message to the MME of the UE connected to the RN via the established S1 interface.

5. The method according to any one of claims 1 to 3, wherein the identifier of the RN comprises a global eNB ID and a Tracking Area Identity, TAI, of the RN.

6. A method of transferring identifier information of a pool of Mobility Management Entities, MMEs, comprising:
a Donor, DeNB, receiving a Handover Request message; and
the DeNB sending identifier information of a MME pool serving the DeNB to an entity to be handed over to the DeNB in a handover command.

7. The method according to claim 6, wherein after the DeNB receives the Handover Request message and before the DeNB sends the identifier information of the MME pool serving the DeNB to the entity to be handed over in the handover command, the method further comprises:
the DeNB determining whether the entity to be handed over is being handed over to a donor cell managed by the DeNB or the DeNB determining whether the entity to be handed over is a Relay Node, RN; and
the DeNB sending the identifier information of the MME pool serving the DeNB to the entity to be handed over in the handover command upon determining that the entity to be handed over is being handed over to the donor cell managed by the DeNB or determining that the entity to be handed over is a RN.

8. A method of transferring identifier information of a pool of Mobility Management Entities, MMEs, comprising:
an Operation and Maintenance, OAM, apparatus receiving a request sent from a Relay Node, RN, to download configuration information; and
the OAM apparatus sending identifier information of a MME pool serving a Donor eNB, DeNB, to the RN.

9. The method according to claim 8, wherein the OAM, apparatus receiving a request sent from an RN to download configuration information comprises:
the OAM apparatus receiving the request sent from the RN to download configuration information during a startup phase of the RN; and
the OAM apparatus sending identifier information of a MME pool serving a DeNB to the RN comprises:
the OAM apparatus sending to the RN identifier information of a MME pool serving each DeNB accessible to the RN.

10. The method according to claim 8, wherein the OAM, apparatus receiving a request sent from an RN to download configuration information comprises:
the OAM apparatus receiving the request, carrying identifier information of a target DeNB, sent from the RN to download configuration information after the RN is handed over from a source DeNB to the target DeNB; and
the OAM apparatus sending identifier information of a MME pool serving a DeNB to the RN comprises:
the OAM apparatus sending identifier information of a MME pool serving the target DeNB to the RN.

11. A relay node, comprising:
a determination unit configured to determine whether a target DeNB and a source DeNB are served by a same MME pool after the relay node is handed over from the source DeNB to the target DeNB; and
a trigger unit configured to send a Handover Required message carrying a target identifier, which is an identifier of the relay node, to an MME of a UE connected to the relay node upon determining that the target DeNB and the source DeNB not to be served by the same MME pool to instruct the MME of the UE to send context information of the UE to an MME in a MME pool serving the target DeNB according to the target identifier.

12. The relay node according to claim 11, wherein the determination unit is further configured:
to determine whether an identifier the MME pool serving the target DeNB comprised in a Globally Unique Temporary Identifier, GUTI, allocated from an MME of the relay node is same as an identifier of a MME pool serving the source DeNB, and if so, to determine that the target DeNB and the source DeNB are served by the same MME pool; otherwise, to determine that the target DeNB and the source DeNB are not served by the same MME pool; or
the determination unit is further configured:
to determine whether an identifier of the MME pool serving the target DeNB carried in a handover command sent from the target DeNB is same as an identifier of a MME pool serving the source DeNB, and if so, to determine that the target DeNB and the source DeNB are served by the same MME pool; otherwise, to determine that the target DeNB and the source DeNB are not served by the same MME pool; or
the determination unit is further configured:
to report information of the target DeNB to an Operation and Maintenance, OAM, apparatus; and
to determine whether an identifier of the MME pool serving the target DeNB returned from the OAM apparatus is same as an identifier of a MME pool serving the source DeNB upon reception of the identifier of the MME pool serving the target DeNB, and if so, to determine that the target DeNB and the source DeNB are served by the same MME pool; otherwise, to determine that the target DeNB and the source DeNB are not served by the same MME pool.

13. The relay node according to claim 12, further comprising:
a download unit configured to download identifier information of a MME pool serving each DeNB accessible to the RN from the Operation and Maintenance, OAM, apparatus before the relay node is handed over from the source DeNB to the target DeNB; and
the determination unit is further configured:
to determine whether the downloaded identifier of the MME pool serving the target DeNB is same as the identifier of the MME pool serving the source DeNB, and if so, to determine that the target DeNB and the source DeNB are served by the same MME pool; otherwise, to determine that the target DeNB and the source DeNB are not served by the same MME pool.

14. A Donor eNB, DeNB, wherein the donor eNB comprises:
a reception unit configured to receive a Handover Request; and
a transmission unit configured to send identifier information of a MME pool serving the DeNB to an entity to be handed over to the donor eNB in a handover command.

15. The DeNB according to claim 19, wherein the transmission unit is further configured:
to determine whether the entity to be handed over is being handed over to a donor cell managed by the DeNB; and to send the identifier information of the MME pool serving the DeNB to the entity to be handed over in the handover command upon determining that the entity to be handed over is being handed over to the donor cell managed by the DeNB; or
the transmission unit is further configured:
to determine whether the entity to be handed over is a Relay Node, RN; and to send the identifier information of the MME pool serving the DeNB to the entity to be handed over in the handover command upon determining that the entity to be handed over is an RN.

16. An Operation and Maintenance, OAM, apparatus, comprising:
a reception unit configured to receive a request sent from a Relay Node, RN, to download configuration information; and
a transmission unit configured to send identifier information of a MME pool serving a Donor eNB, DeNB, to the RN.

17. The apparatus according to claim 16, wherein the reception unit is configured:
to receive the request sent from the RN to download configuration information during a startup phase of the RN; and
the transmission unit is configured:
to send to the RN identifier information of a MME pool serving each DeNB accessing to the RN.

18. The apparatus according to claim 16, wherein the reception unit is configured:
to receive the request, carrying information of a target DeNB, sent from the RN to download configuration information after the RN is handed over from a source DeNB to the target DeNB; and
the transmission unit is configured:
to send the identifier information of a MME pool serving the target DeNB to the RN.
